# EUROPÄISCHE PATENTSCHRIFT

(11) **EP 0 643 216 B1**
(45) Veröffentlichungstag und Bekanntmachung des Hinweises auf die Patenterteilung: **11.03.1998**
(21) Anmeldenummer: 94112573.4
(22) Anmeldetag: 11.08.1994
(51) Int. Cl.: F02F 7/00, F16C 9/06

(54) **Kurbelwellenlager**
Crankshaft bearing
Palier de vilebrequin

(30) Priorität: 09.09.1993 DE 4330565
(43) Veröffentlichungstag der Anmeldung: 15.03.1995
(73) Patentinhaber: Dr.Ing.h.c. F. Porsche Aktiengesellschaft, 70435 Stuttgart (DE)
(72) Erfinder: Müller, Robert, D-71297 Mönsheim (DE); Wüst, Johannes, D-74078 Heilbronn (DE)

(56) Entgegenhaltungen:
- EP-A- 0 395 130
- DE-A- 3 442 519
- DE-B- 1 262 070
- FR-A- 1 299 038
- GB-A- 2 237 337

## Beschreibung

Die Erfindung bezieht sich auf ein Kurbelwellenlager für Brennkraftmaschinen nach dem Oberbegriff des Patentanspruchs 1.

Die Lagerspielgröße von Brennkraftmaschinen-Kurbelwellenlager hat einen signifikanten Einfluß auf die Geräuschentstehung und - übertragung; ebenso auf den Schmieröldurchsatz. Erhebliche Lagerspielvergrößerungen bei steigender Temperatur treten vor allem bei Brennkraftmaschinen auf, die ein Gehäuse aus einer Leichtmetall-Legierung umfassen, dessen Kurbelwellenlager eine eisenmetallische Kurbelwelle aufnehmen. Die unterschiedlichen Ausdehnungskoeffizienten von leichtmetallischem Gehäuse und eisenmetallischer Kurbelwelle bewirken temperaturabhängig eine Vergrößerung der Lagerbohrung des jeweiligen Kurbelwellenlagers, was beim Betrieb der Brennkraftmaschine eine Geräuschzunahme nach sich zieht.

Aus der GB-A-22 37 337 ist ein Kurbelwellenlager für Brennkraftmaschinen bekannt, bei der das Kurbelgehäuse und der Lagerdeckel aus Aluminum bestehen. Im Bereich der Lagerbohrung ist ein schalenartiges Kompensatorglied ausgebildet, das aus einer Aluminum-Legierung besteht, deren thermischer Ausdehnungskoeffizient kleiner als der des Kurbelgehäuses bzw. des Lagerdeckels ist. Dieses Kompensatorglied ist mit dem Kurbelgehäuse bzw. dem Lagerdeckel vergossen. Aufgrund des gegenüber dem Aluminiumgehäuse relativ geringen thermischen Ausdehnungskoeffizienten soll eine Vergrößerung des Lagerspiels in Bezug auf die beispielsweise aus Stahl hergestellte Kurbelwelle vermieden werden.

Aus der FR-A-12 99 038 ist weiterhin eine Kurbelwellenlagerung mit einem Kurbelgehäuse und einem Lagerdeckel aus Aluminium bekannt. In die Lagerbohrung ist eine zweiteilige Lagerschale aus Aluminium eingesetzt. Im Bereich des Lagerdeckels ist zusätzlich eine weitere Halbschale aus Aluminium eingesetzt, die zwischen der eigentlichen Lagerschale und der Lagerbohrung angeordnet ist.

Aus der DE-OS 31 35 683 ist es bekannt, in einem aus einer Leichtmetall-Legierung bestehenden Lagerdeckel eines Kurbelwellenlagers einen eisenmetallischen Kern einzugießen, der durch einen Streifen gebildet wird und sich quer zum Lagerdeckel sowie mit Abstand zum Kurbelwellenzapfen erstreckt. Da sich bei dieser Ausführung die Bohrung des Lagerdeckels nach wie vor ausdehnt, wird die angestrebte Geräuschminderung mit den vorgeschlagenen Mitteln nicht erreicht.

Bei einer anderen bekannten Lagerung der Kurbelwelle, DE-34 26 208 C1, in einem Gehäuse aus einer Leichtmetall-Legierung werden gute Ergebnisse bezüglich der Geräuschabsenkung erzielt; denn der in die Leichtmetall-Kurbelwellenlagerung eingegossene eisenmetallische Kern umgibt den Kurbelzapfen, so daß eine unerwünschte Lagerspielvergrößerung vermieden wird.

Aufgabe der Erfindung ist es, ein Kurbelwellenlager einer Brennkraftmaschine mit einem Gehäuse aus einer Leichtmetall-Legierung weiter zu verbessern und zwar mit dem Ziel, eine hochwirksame Vorrichtung zur Lagerspielreduktion zu vereinfachen und ihre Herstellkosten zu reduzieren.

Erfindungsgemäß wird diese Aufgabe durch die kennzeichnenden Merkmale des Patentanspruchs 1 gelöst. Weitere, die Erfindung ausgestaltende Merkmale sind in den nachfolgenden Ansprüchen enthalten.

Die mit der Erfindung hauptsächlich erzielten Vorteile sind darin zu sehen, daß die Vorrichtung ein Kompensatorglied umfasst, das zwischen Lagerbohrung und Kurbelzapfen angeordnet ist und einen wesentlich größeren Ausdehnungskoeffizienten besitzt als seine benachbarten Teile, wodurch die Lagerspielvergrößerung beim Betrieb der Brennkraftmaschine, insbesondere hervorgerufen durch das Brennkraftmaschinengehäuse aus einer Leichtmetall-Legierung, gezielt minimiert wird. Außerdem wird der Öldurchsatz günstig beeinflußt, weil der Ölfilm in der Lagerbohrung eine verbesserte Tragfähigkeit aufweist.

Um funktionsgerechte Laufeigenschaften der Kurbelwelle bzw. ihres Kurbelzapfens sicherzustellen, ist zwischen Kompensatorglied und Kurbelwelle eine Lagerschale aus einem metallischen Werkstoff, z.B. Stahl, vorgesehen. Soweit vergleichbare Laufeigenschaften erzielbar sind, ist aber auch eine andere Bauweise, z.B. Kompensatorglied mit Folie oder ähnliches, denkbar.

Als besonders geeigneter Werkstoff für das Kompensatorglied wird Kunststoff und hier hochfestes Thermoplast, z.B. Polyamid, angesehen. Darüber hinaus dürfte ein anisthoroper Werkstoff die Anforderungen an das Kompensatorglied erfüllen, wobei dieser Werkstoff in radialer Richtung relativ große und in axialer sowie tangentialer Richtung geringe Wärmedehnung aufweist. Vorstellbar als Werkstoff für das Kompensatorglied ist auch Zink oder eine Zinklegierung.

Das Kompensatorglied und die Lagerschale bilden ein Modul, das sich auf einfache Weise als Zulieferteil herstellen und/oder zusammensetzen sowie in das Kurbelwellenlager bei der Montage der jeweiligen Brennkraftmaschine einsetzen lässt. Das Kompensatorglied kann mittels Formschluß von der im Querschnitt U-förmigen Lagerschale in Lage gehalten werden, wobei auch andere Formschluß bewirkende Konfigurationen möglich sind. Als Variante kann das Kompensatorglied mit der Lagerschale durch Kleben, Vulkanisieren oder dergleichen verbunden sein. Eine andere Ausführung ist: Das Kompensatorglied stoffschlüssig - Kleben, Vulkanisieren - mit der Lagerbohrung zu verbinden.

Das Kompensatorglied, z.B. mit Lagerschale als Modul, eignet sich nicht nur für einteilige Kurbelwellenlager, wie sie in Einzylindermotoren verwendet werden, sondern auch für geteilte Kurbelwellenlager, bestehend aus einem Gehäuseabschnitt eines Zylinderkurbelgehäuses, auch Lagerstuhl genannt, und einem Lagerdeckel, z.B. einer Lagerbrücke oder eines Kurbelgehäuseunterteils. In diesem Fall wird die Vorrichtung - Kompensatorglied, Lagerschale - durch zwei schalenartige Hälften gebildet, die in die Lagerbohrung eingesetzt werden.

Schließlich ist die Vorrichtung nicht nur zur Lagerung von Kurbelwellen in Kolbenbrennkraftmaschinen geeignet, sondern auch in Kolbenkompressoren.

In der Zeichung sind Ausführungsbeispiele der Erfindung dargestellt, die nachstehend näher beschrieben werden.

Es zeigt
- Fig. 1: einen Teilquerschnitt einer Brennkraftmaschine im Bereich eines Kurbelwellenlagers mit der erfindungsgemäßen Vorrichtung,
- Fig. 2: einen Schnitt nach der Linie II-II der Fig. 1, jedoch als nichtmaßstäbliche Prinzipdarstellung,
- Fig. 3 bis Fig. 10: Teilansichten X der Fig. 2 mit verschiedenen schematisch gezeigten Ausführungsformen.

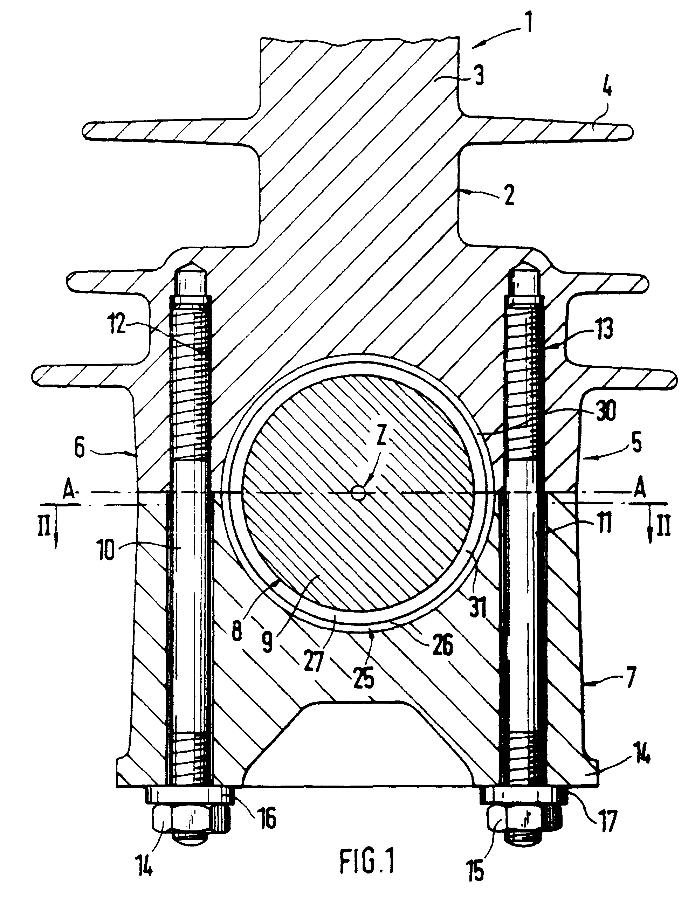

Von einer nicht näher gezeigten mehrzylindrigen Brennkraftmaschine 1 - Hubkolbenbauart - ist ein aus einer Leichtmetall-Legierung bestehendes Zylinderkurbelgehäuse 2 gezeigt, wovon eine Wand 3 sich zwischen Zylindern erstreckt, was nicht aus der Fig. 1 hervorgeht. Am mit Versteifungsrippen 4 versehenen Zylinderkurbelgehäuse 2 angebracht ist ein Kurbelwellenlager 5, das durch einen mit dem Zylinderkurbelgehäuse 2 aus eine Stück hergestellten Lagerabschnitt 6 und einen Lagerdeckel 7 gebildet wird. Beide Lagerteile sind in einer Ebene A-A zusammengesetzt, die das Zentrum Z eines einer Kurbelwelle 8 zugehörigen Kurbelzapfens 9 schneidet und sich senkrecht zur Zylinderachse erstreckt.

Der Lagerdeckel 7 kann Bestandteil einer das Zylinderkurbelgehäuse 2 versteifenden Brücke sein, die mehrere Lagerdeckel 7 trägt und aus einer Leichtmetall-Legierung besteht. Brücken dieser Art sind in der DE-22 57 651 und EP- 0 038 560 dargestellt. Der Lagerdeckel 7 ist am Lagerabschnitt 8 mittels senkrecht zur Ebene A-A wirkender und mit Abstand zueinander angeordneter Schrauben 10, 11 gehalten, die in Gewinde 12, 13 des Lagerabschnitts 6 eingedreht sind. Auf der jeweils freien Seite der Schrauben 10, 11 greifen Schraubenmuttern 14, 15 an, die unter Zwischenschaltung von Dicherungsringen 16, 17 den Lagerdeckel 7 gegen der Lagerabschnitt 6 spannen.

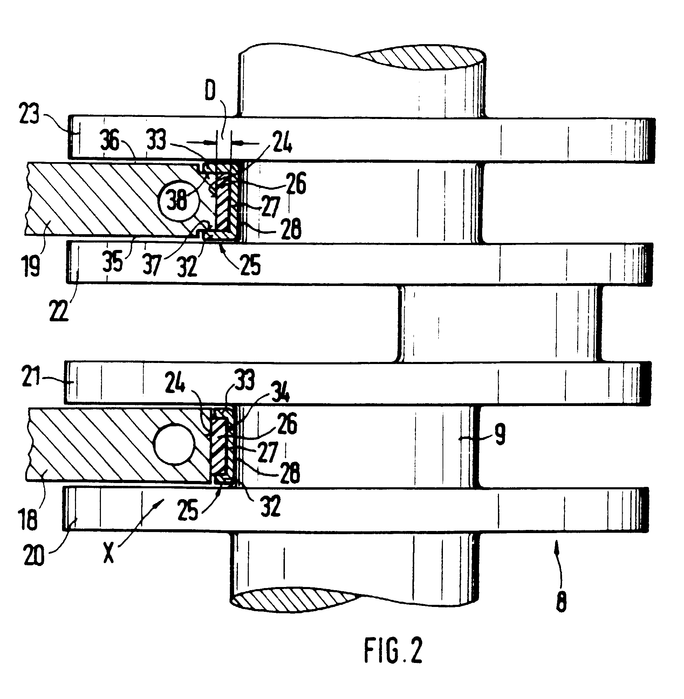

In Fig. 2 sind der Lagerabschnitt 6 und der Lagerdeckel 7 an Lagerstühlen 18, 19 vorgesehen, die sich stegartig zwischen Wangen 20, 21 und 22, 23 der Kurbelwelle 8 erstrecken.

Jeder Lagerstuhl 18 oder 19 ist mit einer Lagerbohrung 24 versehen, die den Kurbelzapfen 9 umgibt. Zwischen Lagerbohrung 24 und Kurbelzapfen 9 ist eine Vorrichtung 25 angeordnet, die zur kontrollierten Reduktion der Lagerspielvergrößerung - zwischen Lagerbohrung 24 und Kurbelzapfen 9 - während des Betriebs der Brennkraftmaschine beiträgt.

Die Vorrichtung 25 umfasst ein den Kurbelzapfen 9 ringartig umgebendes Kompensatorglied 26, das aus einem Werkstoff mit relativ großem Ausdehnungskoeffizienten besteht; der Querschnitt des Kompensatorgliedes 26 ist rechteckig, wobei andere geometrische Formen oder Formkombinationen vorstellbar sind. Zwischen Kompensatorglied und Kurbelwellenzapfen 9 ist eine Lagerschale 27 vorgesehen, die im Ausführungsbeispiel aus metallischem Werkstoff, beispielsweise Stahl, besteht und auf der dem Kurbelzapfen 9 zugekehrten Seite, die als Lauffläche 28 ausgebildet ist, mit einer geeigneten Einlaufbeschichtung versehen ist.

Als Werkstoff für das Kompensatorglied geeignet ist:
■ w₁: Kunststoff, z.B. hochfestes Thermoplast; Polyamid
■ w₂: Anisthoroper Werkstoff, z.B. Thermoplast mit unidirektionaler Faserverstärkung - anisthorope Körper verhalten sich in verschiedenen Raumrichtungen physikalisch unterschiedlich.
■ w₃: Zink bzw. Zinkllegierung.

Die Werkstoff-Auswahl und/oder -Neuentwicklung wird entscheidend von mechanischen, thermischen und Umgebungs-Belastungen des Kompensatorgliedes 26 beeinflußt.

Die Dicke D (Fig. 2) des Kompensatorgliedes 26 wird in Abhängigkeit der räumlichen Umgebung und des Werkstoffes - w₁; w₂; w₃ - rechnerisch/iterativ oder empirisch bestimmt. Dabei wird die Dicke D so dimensioniert, daß sich folgende Verhalten v₁ und v₂ realisieren lassen:
■ v₁: Das Lagerspiel zwischen Kurbelzapfen 9 und Vorrichtung 25 bleibt bei steigender Betriebstemperatur der Brennkraftmaschine konstant.
■ v₂: Das Lagerspiel zwischen Kurbelzapfen 9 und Vorrichtung 25 verkleinert sich bei steigender Betriebstemperatur der Brennkraftmaschine.

Die Lagerschale 27 ist ein Träger für das Kompensatorglied 26, dergestalt, daß beide eine Art Modul 29 bilden, das sich entweder als Ringteil in ein einteiliges Kurbelwellenlager eines Einzylindermotors - siehe US-4,549.510 - oder als aus zwei halbkreisförmigen Schalenhälften 30, 31 bestehendes Bauteil in das zweiteilige Kurbelwellenlager 5 gemäß Fig. 1 leicht einsetzen lässt.

Gemäß der im Lagerstuhl 18 vorgesehenen Vorrichtung 25 weist die Lagerschale 27 einen U-förmigen Querschnitt auf, der als Aufnahme für das im Querschnitt rechteckige Kompensatorglied 26 dient. Anders ausgedrückt: Das Kompensatorglied 26 wird von Schenkeln 32, 33 der Lagerschale in etwa teilweise gekammert und begrenzt dergestalt, daß es unter Formschluß in Lage gehalten wird. Gegebenenfalls kann zwischen Kompensatorglied 26 und Lagerschale 27 bei 34 eine Folie, Beschichtung oder dergleichen aus wärmeisolierendem Material, vorgesehen werden.

Beim Lagerstuhl 19 sind die Schenkel 32, 33 der Lagerschale 27 derart lang ausgebildet, daß sie parallele Wandungen 35, 36 umgreifen, die hierzu örtlich mit Ausnehmungen 37, 38 versehen sind. Die Schenkel 32, 33 arbeiten mit geringem Spiel mit den Ausnehmungen 37, 38 zusammen und das Kompensatorglied 26 ist vollständig gekammert.

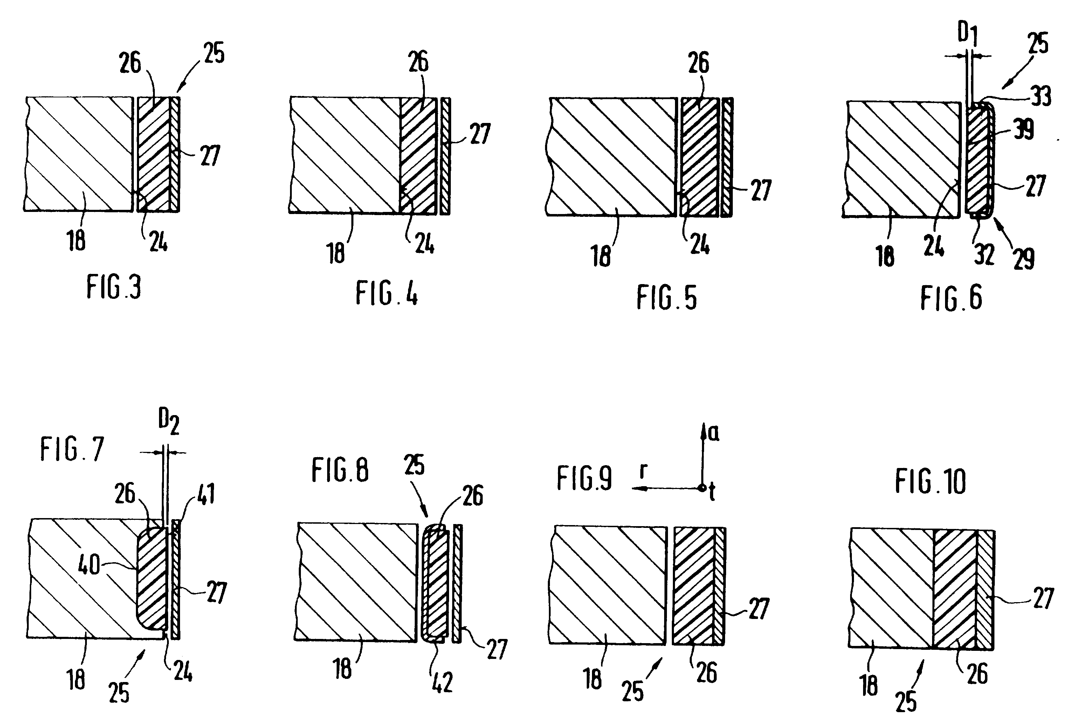

In Fig. 3 ist dargestellt, daß das Kompensatorglied 26 und die Lagerschale 27 stoffschlüssig durch Kleben, Vulkanisieren oder dergleichen verbunden sind.

Dagegen ist nach Fig. 4 die Lagerschale 27 in vorgenannter Weise mit der Lagerbohrung 23 des Lagerstuhls 17 verbunden.

Gemäß Fig. 5 sind die Lagerschale 27 und das Kompensatorglied 26 ohne Form- oder Stoffschlußverbindungen zusammengesetzt.

Aus der Fig. 6 ist ersichtlich, daß die Länge der Schenkel 32, 33 der Lagerschale 27 derart bemessen ist, daß sie kürzer sind als eine Anlagefläche 39 des Kompensatorgliedes 26, die sich benachbart der Lagerbohrung 24 sich erstreckt; dies ist mit dem Abstand D₁ bezeichnet.

Wie in Fig. 7 gezeigt, weist der Lagerstuhl 18 bzw. der Lagerdeckel 7 im Bereich der Lagerbohrung 24 eine U-förmige Ausnehmung 40 auf, in die das Kompensatorglied 26 mit korrespondierenden Abmessungen eingesetzt ist - Teilkammerung - dabei ragt aber eine Anlagefläche 41, die benachbart der Lagerschale 27 verläuft, über die Lagerbohrung 24 hinaus; dies wird mit Abstand D₂ verdeutlicht.

Die Fig. 8 zeigt eine Ausführungsform, bei der zwischen Lagerbohrung 24 und Kompensatorglied 26 ein Stützteil 42 angeordnet ist, das einen U-förmigen Querschnitt aufweist und aus Metall, Kunststoff oder dergleichen hergestellt sein kann.

Bei der Ausführung nach Fig. 9 besteht das Kompensatorglied 26 aus einem anisthoropen Werkstoff w₂. Dabei handelt es sich um ein Thermoplast mit unidirektionaler Faserverstärkung. Bei diesem Beispiel treten in radialer Richtung r relativ große und in axialer und tangentialer Richtung a bzw. t relativ kleine Wärmedehnungen auf.

Schließlich wird in Fig. 10 der Aufbau der Vorrichtung 25 gezeigt, bei der das Kompensatorglied 26 aus Zink bzw. einer Zinklegierung besteht. Beide Teile können entweder als ein miteinander verbundenes Modul oder getrennt voneinander in das Kurbelwellenlager 7 eingesetzt werden.

Das Anwendungsgebiet der Vorrichtung 25 ist nicht auf Kurbelwellenlager von ein- oder mehrzylindrigen Brennkraftmaschinen der Hubkolbenbauart beschränkt. Es besteht auch die Möglichkeit, sie z.B. bei Kolbenkompressoren, wo vergleichbare technische Anforderungen gestellt werden, einzusetzen.

## Patentansprüche

1. Kurbelwellenlager für Brennkraftmaschinen, das in einem aus einer Leichtmetall-Legierung bestehenden Gehäuse der Brennkraftmaschine vorgesehen ist, eine Lagerbohrung für einen Kurbelzapfen einer Kurbelwelle umfasst und mit einer Vorrichtung zur Reduktion der Lagerspielvergrößerung während des Betriebs der Brennkraftmaschine versehen ist und die Vorrichtung (25) zwischen Kurbelzapfen (9) und Lagerbohrung (24) vorgesehen ist und ein den Kurbelzapfen (9) umgebendes ringartiges Kompensatorglied (26) aufweist, **dadurch gekennzeichnet**, daß das Kompensatorglied aus einem Werkstoff besteht, dessen thermischer Ausdehnungskoeffizient größer als der der benachbarten Bauteile ist.

2. Kurbelwellenlager nach Anspruch 1, **dadurch gekennzeichnet**, daß zwischen Kompensatorglied (26) und Kurbelwellenzapfen (9) eine Lagerschale (27) angeordnet ist.

3. Kurbelwellenlager nach Anspruch 1, **dadurch gekennzeichnet**, daß das Kompensatorglied (26) aus Kunststoff, z.B. hochfestem Thermoplast, besteht.

4. Kurbelwellenlager nach Anspruch 3, **dadurch gekennzeichnet**, daß das Kompensatorglied (26) aus Polyamid besteht.

5. Kurbelwellenlager nach Anspruch 1, **dadurch gekennzeichnet**, daß das Kompensatorglied (26) aus einem anisthoropen Werkstoff, z.B. Thermoplast mit unidirektionaler Faserverstärkung besteht, der in radialer Richtung relativ große und in axialer und tangentialer Richtung relativ geringe Wärmedämmung aufweist.

6. Kurbelwellenlager nach Anspruch 1, **dadurch gekennzeichnet**, daß das Kompensatorglied (26) aus Zink oder einer Zinklegierung besteht.

7. Kurbelwellenlager nach Anspruch 2, **dadurch gekennzeichnet**, daß die Lagerschale (27) aus einem metallischen Werkstoff hergestellt ist.

8. Kurbelwellenlager nach einem oder mehreren der vorangehenden Ansprüche, **dadurch gekennzeichnet**, daß die Dicke (D) des Kompensatorgliedes (26) derart dimensioniert ist, daß das Lagerspiel zwischen Kurbelzapfen (9) und Vorrichtung (25) bei steigender Betriebstemperatur der Brennkraftmaschine konstant bleibt.

9. Kurbelwellenlager nach einem oder mehreren der vorangehenden Ansprüche, **dadurch gekennzeichnet**, daß die Dicke (D) des Kompensatorgliedes (26) derart dimensioniert ist, daß das Lagerspiel zwischen Kurbelzapfen (9) und Vorrichtung (25) sich bei steigender Betriebstemperatur der Brennkraftmaschine verkleinert.

10. Kurbelwellenlager nach einem oder mehreren der vorangehenden Ansprüche, **dadurch gekennzeichnet**, daß die Lagerschale (27) und das Kompensatorglied (26) ein Modul (29) bilden.

11. Kurbelwellenlager nach Anspruch 10, **dadurch gekennzeichnet**, daß die Lagerschale (27) als Träger für das Kompensatorglied (26) ausgebildet ist.

12. Kurbelwellenlager nach Anspruch 11, **dadurch gekennzeichnet**,. daß die Lagerschale (27) im Querschnitt U-förmig ausgebildet ist und eine Aufnahme für das Kompensatorglied (26) bildet.

13. Kurbelwellenlager nach Anspruch 12, **dadurch gekennzeichnet**, daß die Länge der Schenkel (32, 33) der Lagerschale (27) derart bemessen ist, daß sie kürzer sind als eine Anlagefläche (39) des Kompensatiorgliedes (26), die benachbart der Lagerbohrung (24) verläuft.

14. Kurbelwellenlager miteinem parallele Wandungen aufweisenden Lagerstuhl nach Anspruch 12, **dadurch gekennzeichnet**, daß die Schenkel (32, 30) der Lagerschale (27) derart ausgebildet sind, daß sie die parallelen Wandungen (35, 36) umgreifen.

15. Kurbelwellenlager nach einem oder mehreren der vorangehenden Ansprüche, **dadurch gekennzeichnet**, daß die Lagerbohrung (24) mit einer U-förmigen Ausnehmung (40) zur Aufnahme des Kompensatorgliedes (26) aufweist.

16. Kurbelwellenlager nach Anspruch 15, **dadurch gekennzeichnet**, daß eine der Lagerschale (27) zugekehrte Anlagefläche (41) des Kompensatorgliedes (26) über die Lagerbohrung (24) übersteht.

17. Kurbelwellenlager nach einem oder mehreren der vorangehenden Ansprüche, **dadurch gekennzeichnet**, daß zwischen Lagerbohrung (24) und Kompensatorglied (26) eine Stützteil (42) vorgesehen ist.

18. Kurbelwellenlager nach Anspruch 17, **dadurch gekennzeichnet**, daß das Stützteil (42) eine im Querschnitt U-förmige Aufnahme für das Kompensatorglied (26) bildet.

19. Kurbelwellenlager nach einem oder mehreren der vorangehenden Ansprüche, **dadurch gekennzeichnet**, daß das Kompensatorglied (26) stoffschlüssig durch Kleben, Vulkanisieren oder dergleichen mit der Lagerschale (27) verbunden ist.

20. Kurbelwellenlager nach einem oder mehreren der vorangehenden Ansprüche, **dadurch gekennzeichnet**, daß das Kompensatorglied (26) stoffschlüssig durch Kleben, Vulkanisieren oder dergleichen mit der Lagerbohrung (24) verbunden ist.

21. Kurbelwellenlager, bestehend aus einem an einem Zylinderkurbelgehäuse angebrachten Gehäuseabschnitt und einem Lagerdeckel eines Kurbelgehäuseunterteils, die in einer Mittellängsebene des Kurbelzapfens zusammengesetzt durch beiderseits der Kurbelzapfen angeordnete und in Richtung Längsachse zylindrisch ausgerichtete Verschraubungen miteinander verbunden sind, nach einem oder mehreren der vorangehenden Ansprüche, **dadurch gekennzeichnet,** daß die Vorrichtung (25) aus zwei halbkreisförmigen Schalenhälften (30, 31) besteht, die in die Lagerbohrung (24) eingesetzt sind.

22. Kurbelwellenlager nach einem oder mehreren der vorangehenden Ansprüche, **dadurch gekennzeichnet**, daß die Vorrichtung (25) für Kurbelwellenlager von Kolbenkompressoren verwendbar ist.

## Claims

1. A crankshaft bearing for internal-combustion engines, which is provided in a housing - consisting of a light-metal alloy - of the internal-combustion engine, has a bearing bore for a journal of a crankshaft and is provided with a device for reducing the increase in the bearing play during operation of the internal-combustion engine, and the device (25) is provided between the crankshaft journal (9) and the bearing bore (24) and comprises a ring-like compensating member (26) surrounding the crankshaft journal (9), **characterized in that** the compensating member consists of a material of which the thermal coefficient of expansion is greater than that of the adjacent components.

2. A crankshaft bearing according to Claim 1, **characterized in that** a bearing shell (27) is arranged between the compensating member (26) and the crankshaft journal (9).

3. A crankshaft bearing according to Claim 1, **characterized in that** the compensating member (26) consists of plastics material, for example high-strength thermoplastic material.

4. A crankshaft bearing according to Claim 3, **characterized in that** the compensating member (26) consists of polyamide.

5. A crankshaft bearing according to Claim 1, **characterized in that** the compensating member (26) consists of an anisotropic material, for example thermoplastic material with a unidirectional fibre reinforcement, having a relatively high degree of thermal insulation in the radial direction and a relatively low degree of thermal insulation in the axial and tangential directions.

6. A crankshaft bearing according to Claim 1, **characterized in that** the compensating member (26) consists of zinc or a zinc alloy.

7. A crankshaft bearing according to Claim 2, **characterized in that** the bearing shell (27) is produced from a metallic material.

8. A crankshaft bearing according to one or more of the preceding Claims, **characterized in that** the thickness (**D**) of the compensating member (26) is dimensioned in such a way that the bearing play between the crankshaft journal (9) and the device (25) remains constant as the operating temperature of the internal-combustion engine increases.

9. A crankshaft bearing according to one or more of the preceding Claims, **characterized in that** the thickness (**D**) of the compensating member (26) is dimensioned in such a way that the bearing play between the crankshaft journal (9) and the device (25) is reduced as the operating temperature of the internal-combustion engine increases.

10. A crankshaft bearing according to one or more of the preceding Claims, **characterized in that** the bearing shell (27) and the compensating member (26) form a module (29).

11. A crankshaft bearing according to Claim 10, **characterized in that** the bearing shell (27) is constructed as a support for the compensating member (26).

12. A crankshaft bearing according to Claim 11, **characterized in that** the bearing shell (27) is made U-shaped in cross-section and forms a receiving means for the compensating member (26).

13. A crankshaft bearing according to Claim 12, **characterized in that** the length of the arms (32, 33) of the bearing shell (27) is dimensioned in such a way thay they are shorter than an abutment face (39) of the compensating member (26) extending adjacent to the bearing bore (24).

14. A crankshaft bearing with a bearing frame comprising parallel walls, according to Claim 12, **characterized in that** the arms (32, 33) of the bearing shell (27) are constructed in such a way thay they engage around the parallel walls (35, 36).

15. A crankshaft bearing according to one or more of the preceding Claims, **characterized in that** the bearing bore (24) is provided with a U-shaped recess (40) for receiving the compensating member (26).

16. A crankshaft bearing according to Claim 15, **characterized in that** an abutment face (41) of the compensating member (26) facing the bearing shell (27) projects beyond the bearing bore (24).

17. A crankshaft bearing according to one or more of the preceding Claims, **characterized in that** a support part (42) is provided between the bearing bore (24) and the compensating member (26).

18. A crankshaft bearing according to Claim 17, **characterized in that** the support part (42) forms a receiving means of U-shaped cross-section for the compensating member (26).

19. A crankshaft bearing according to one or more of the preceding Claims, **characterized in that** the compensating member (26) is joined integrally to the bearing shell (27) by adhesion, vulcanization or the like.

20. A crankshaft bearing according to one or more of the preceding Claims, **characterized in that** the compensating member (26) is joined integrally to the bearing bore (24) by adhesion, vulcanization or the like.

21. A crankshaft bearing, comprising a housing portion mounted on a cylinder crankcase and a bearing cover of a lower part of the crankcase, which, joined together in a median longitudinal plane of the crankshaft journal, are connected together by bolt fastenings arranged on both sides of the crankshaft journal and orientated in a cylindrical manner in the direction of the longitudinal axis, according to one or more of the preceding Claims, **characterized in that** the device (25) comprises two semicircular shell halves (30, 31) inserted in the bearing bore (24).

22. A crankshaft bearing according to one or more of the preceding Claims, **characterized in that** the device (25) for crankshaft journals can be used by piston compressors.

## Revendications

1. Palier de vilebrequin pour moteurs à combustion interne, qui est prévu dans un carter du moteur à combustion interne, fait dans un alliage de métal léger, qui comprend un perçage de palier pour un tourillon d'un vilebrequin et qui est pourvu d'un dispositif destiné à réduire l'augmentation du jeu de palier pendant le fonctionnement du moteur à combustion interne et le dispositif (25) est prévu entre le tourillon (9) et le perçage de palier (24) et comporte un organe de compensateur (26) du type annulaire, entourant le tourillon (29), caractérisé en ce que l'organe de compensateur est fait d'un matériau dont le coefficient de dilatation thermique est supérieur à celui des composants voisins.

2. Palier de vilebrequin selon la revendication 1, caractérisé en ce qu'une coquille de coussinet (27) est placée entre l'organe de compensateur (26) et le tourillon (9) du vilebrequin.

3. Palier de vilebrequin selon la revendication 1, caractérisé en ce que l'organe de compensateur (26) est fait d'une matière plastique, par exemple d'une matière thermoplastique très résistante.

4. Palier de vilebrequin selon la revendication 3, caractérisé en ce que l'organe de compensateur (26) est en polyamide.

5. Palier de vilebrequin selon la revendication 1, caractérisé en ce que l'organe de compensateur (26) est fait d'un matériau anisotrope, par exemple une matière thermoplastique avec renfort unidirectionnel des fibres, qui présente une dilatation thermique relativement grande dans la direction radiale et relativement faible dans la direction axiale et tangentielle.

6. Palier de vilebrequin selon la revendication 1, caractérisé en ce que l'organe de compensateur (26) est en zinc ou en alliage de zinc.

7. Palier de vilebrequin selon la revendication 2, caractérisé en ce que la coque de coussinet (27) est réalisée dans un matériau métallique.

8. Palier de vilebrequin selon une ou plusieurs des revendications précédentes, caractérisé en ce que l'épaisseur (D) de l'organe de compensateur (26) a des dimensions telles que le jeu de palier entre le tourillon (9) et le dispositif (25) reste contant lorsqu'augmente la température de service du moteur à combustion interne.

9. Palier de vilebrequin selon une ou plusieurs des revendications précédentes, caractérisé en ce que l'épaisseur (D) de l'organe de compensateur (26) a des dimensions telles que le jeu de palier entre le tourillon (9) et le dispositif (25) reste contant lorsque diminue la température de service du moteur à combustion interne.

10. Palier de vilebrequin selon une ou plusieurs des revendications précédentes, caractérisé en ce que la coque de coussinet (27) et l'organe de compensateur (26) forment un module (29).

11. Palier de vilebrequin selon la revendication 10, caractérisé en ce que la coque de coussinet (27) est conformée en support pour l'organe de compensateur (26).

12. Palier de vilebrequin selon la revendication 11, caractérisé en ce que la coque de coussinet (27) a une section transversale en U et forme un logement pour l'organe de compensateur (26).

13. Palier de vilebrequin selon la revendication 12, caractérisé en ce que la longueur des côtés (32, 33) de la coque de coussinet (27) est telle que ceux-ci sont plus courts qu'une surface d'application (39) de l'organe de compensateur (26), qui s'étend à proximité du perçage de palier (24).

14. Palier de vilebrequin avec un siège, présentant des parois parallèles, selon la revendication 12, caractérisé en ce que les côtés (32, 33) de la coque de coussinet (27) sont tels qu'ils entourent les parois (35, 36) parallèles.

15. Palier de vilebrequin selon une ou plusieurs des revendications précédentes, caractérisé en ce que le perçage de palier (24) présente un évidement (40) en U destiné à recevoir l'organe de compensateur (26).

16. Palier de vilebrequin selon la revendication 15, caractérisé en ce qu'une surface d'application (41), tournée vers la coque de coussinet (27), de l'organe de compensateur (26), dépasse du perçage de palier (24).

17. Palier de vilebrequin selon une ou plusieurs des revendications précédentes, caractérisé en ce qu'un élément d'appui (42) est prévu entre le perçage de palier (24) et l'organe de compensateur (26).

18. Palier de vilebrequin selon la revendication 17, caractérisé en ce que l'élément d'appui (42) forme un logement de section transversale en forme de U pour l'organe de compensateur (26).

19. Palier de vilebrequin selon une ou plusieurs des revendications précédentes, caractérisé en ce que l'organe de compensateur (26) est assemblé par adhérence de matière avec la coque de coussinet (27), par collage, vulcanisation ou similaire.

20. Palier de vilebrequin selon une ou plusieurs des revendications précédentes, caractérisé en ce que l'organe de compensateur (26) est assemblé par adhérence de matière avec le perçage de palier (24), par collage, vulcanisation ou similaire.

21. Palier de vilebrequin, constitué d'une portion de carter fixée sur un carter de vilebrequin cylindrique et d'un couvercle de palier d'une partie inférieure du carter, qui sont assemblés entre eux, dans un plan médian longitudinal du tourillon du vilebrequin, disposés de part et d'autre du tourillon et orientés cylindriquement dans la direction de l'axe longitudinal, selon une ou plusieurs des revendications précédentes, caractérisé en ce que le dispositif (25) est constitué de deux moitiés de coque (30, 31) de forme semi-circulaire, qui sont insérées dans le perçage de palier (24).

22. Palier de vilebrequin selon une ou plusieurs des revendications précédentes, caractérisé en ce que le dispositif (25) peut être utilisé pour des paliers de vilebrequin de compresseurs à piston.
